# EUROPEAN PATENT APPLICATION

(11) **EP 4 841 735 A1**
(43) Date of publication of application: **18.11.2026**
(21) Application number: 25810175.7
(22) Date of filing: 08.05.2025
(51) Int. Cl.: H01M 10/0562, H01M 10/0583, H01M 50/417, H01M 50/449, H01M 50/423, H01M 10/052

(54) **ALL-SOLID-STATE BATTERY**

(30) Priority: 09.05.2024 KR 20240061280; 30.04.2025 KR 20250057473
(71) Applicant: LG Energy Solution, Ltd., Seoul 07335 (KR)
(72) Inventor: CHOI, Seong Won, Daejeon 34122 (KR); LEE, Hongju, Daejeon 34122 (KR); KIM, Ji Young, Daejeon 34122 (KR); LEE, Daejin, Daejeon 34122 (KR)
(74) Representative: Goddar, Heinz J.
(86) International application number: PCT/KR2025/006164
(87) International publication number: WO 2025/234775

(57) **Abstract**

The present disclosure provides an all-solid-state battery comprising an electrode assembly comprising an electrode laminate comprising a positive electrode, an electrolyte film, and a negative electrode; and a pair of protective layers positioned on each of the sides of the positive electrode and the negative electrode of the laminate composite; and a separator wrapped around the electrode assembly in a zigzag manner, such that the electrode assembly is positioned in a folded portion.

## Description

### [Technical Field]

This application claims the benefit of priority to Korean Patent Application No. 10-2024-0061280, filed May 9, 2024, and Korean Patent Application No. 10-2025-0057473, filed April 30, 2025, the disclosures of which are incorporated herein by reference in their entirety.

The present disclosure relates to an all-solid-state battery. More specifically, the disclosure pertains to an all-solid-state battery in which a periphery of an electrode laminate inside the battery is surrounded by a composite separator, wherein the composite separator is composed of a separator layer and a buffer layer. This structure ensures that the electrode laminate is securely fixed by the buffer layer.

### [Related Art]

With the explosion of technology development and demand for mobile devices and automobiles, more research is being conducted on secondary batteries with high energy density, discharge voltage, and good output stability. Examples of such secondary batteries may include lithium-sulfur batteries, lithium-ion batteries, and all-solid-state batteries.

Among them, all-solid-state batteries are superior to other types of secondary batteries in terms of safety, and are gaining traction, especially in electric vehicles and mobile devices. In other words, an all-solid-state battery is a battery that replaces the electrolyte used in a conventional lithium secondary battery from a liquid to a solid, and accordingly, since no flammable solvent is used in the battery, there is no possibility of ignition or explosion due to the decomposition reaction of the conventional electrolyte, which greatly improves safety. All-solid-state batteries also have the advantage of being able to use Li metal or Li alloys as negative electrode materials, which can dramatically improve the energy density relative to the mass and volume of the battery.

The most commonly used all-solid-state batteries are sulfide-based all-solid-state batteries. During fabrication, these sulfide-based all-solid-state batteries typically employ a warm isostatic pressing (WIP) process (i.e., the electrodes are wrapped in a pouch, sealed, and pressurized) to achieve an electrode-solid electrolyte interfacial bond. If the electrode-solid electrolyte interface is not well formed because the electrode-solid electrolyte interface is not properly bonded, it is difficult for lithium (Li) ions to migrate and the battery cannot be operated.

In the case of sulfide-based all-solid-state batteries, a WIP process must be applied during cell manufacturing. This WIP process involves applying isotropic pressure using a solvent within a vessel. However, when the WIP process is performed after stacking multiple electrodes and electrolyte layers, the outermost electrode deforms under WIP pressure, leading to issues such as short circuits or degraded lifespan characteristics.

To address this, a method has been proposed where individual unit cells undergo the WIP process before stacking. After completing the WIP process, these unit cells are then stacked. However, when driving pressure is applied to the stacked unit cells for cell operation, misalignment between electrodes can cause electrode fracture or short circuits.

(Patent Reference 1) Korean Patent Laid-open Publication No. 10-2023-0059000

### [Detailed Description of the Invention]

### [Technical Problem]

The present inventors propose a solution to the above problems. The purpose of this disclosure is to provide an all-solid-state battery with a structure that minimizes electrode fracture and short circuits during the stacking of unit cells manufactured via the WIP process for sulfide-based all-solid-state batteries. This is achieved by using a composite separator with a dual-layer structure to secure the electrode assembly.

### [Technical Solution]

To accomplish the above objectives, an embodiment of the present disclosure provides an all-solid-state battery comprising an electrode laminate including a positive electrode, an electrolyte film, and a negative electrode, and a composite separator that wraps the electrode laminate in a zigzag pattern, positioning the electrode laminate at folded sections. The composite separator includes a separator layer and a buffer layer disposed on at least one surface of the separator layer.

Further, the separator layer may include at least one material selected from a group consisting of polyethylene (PE), polypropylene (PP), and resins made of a blend of PE and PP.

Further, the buffer layer may include at least one material selected from a group consisting of silicone, PTFE, polyurethane resin (PUR), polyolefin (PO), and polyamide (PA).

Further, the separator layer may have a thickness of 4 to 10 µm.

Further, the buffer layer may have a thickness of 10 to 50 µm.

Further, the buffer layer may be in contact with the electrode laminate, thereby securing the electrode assembly.

The electrode laminate may be a monocell or bi-cell.

The electrode laminate may be in a form of an anodeless.

### [Advantageous Effects]

The all-solid-state battery according to one embodiment of the present disclosure has an effect of minimizing electrode fracture and short circuits of the electrode assembly during the stacking of unit cells by securing them with a composite separator of dual-layer structure.

### [Brief Description of Drawing]

FIG. 1 is a diagram illustrating a laminated structure of an all-solid-state battery according to one embodiment of the present disclosure.
FIG. 2 is a diagram illustrating a laminated structure of an all-solid-state battery according to another embodiment of the present disclosure.
FIG. 3 is a diagram illustrating a laminated structure of an all-solid-state battery according to another embodiment of the present disclosure.
FIG. 4 is a diagram illustrating a laminated structure of an all-solid-state battery according to another embodiment of the present disclosure.
FIG. 5 is a diagram illustrating a laminated structure of an all-solid-state battery according to another embodiment of the present disclosure.

### [Best Mode]

The following describes the disclosure in more detail to facilitate understanding of the invention.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

As used herein, the term "electrode laminate" means a structure of an all-solid-state battery in which the positive electrode, electrolyte film, and negative electrode are simply laminated.

As used herein, the term "electrode assembly" refers to a structure of an all-solid-state battery that includes additional configurations other than the electrode laminate. For example, as used herein, it refers to a structure of an all-solid-state battery comprising a protective layer in addition to the electrode laminate.

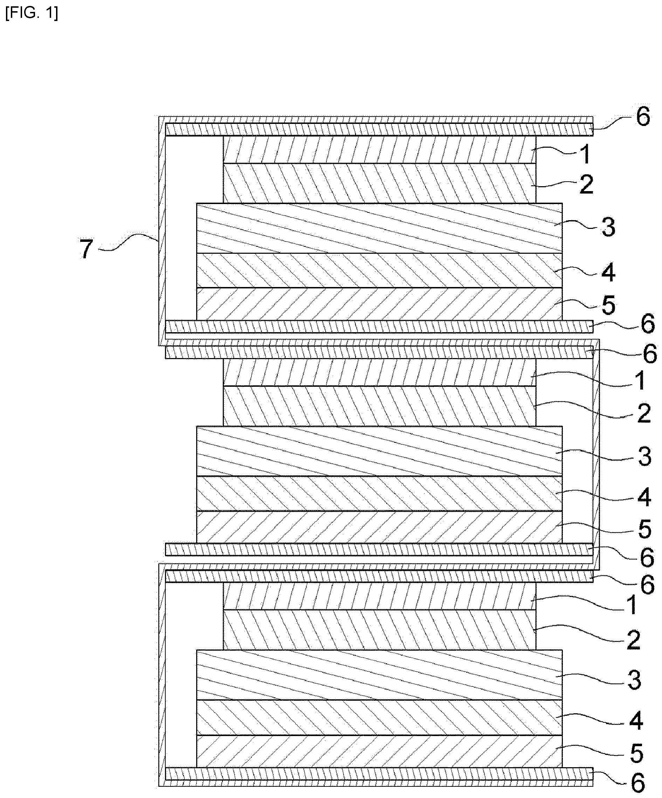

FIG. 1 is a diagram illustrating a laminated structure of an all-solid-state battery according to one embodiment of the present disclosure.

Referring to FIG. 1, an all-solid-state battery according to one embodiment of the present disclosure includes an electrode laminate including a positive electrode (2), an electrolyte film (3), and a negative electrode (4), and a composite separator (6, 7) that wraps the electrode laminate in a zigzag pattern, positioning the electrode laminate at folded sections. The composite separator (6, 7) includes a separator layer (7) and a buffer layer (6) disposed on at least one surface of the separator layer.

### [Best Mode]

An electrode laminate of an all-solid-state battery according to one embodiment of the present disclosure includes an electrode laminate comprising a positive electrode (2), an electrolyte film (3), and a negative electrode (4).

An electrode laminate according to one embodiment of the present disclosure may include a positive electrode (2).

The positive electrode according to one embodiment of the present disclosure can be any positive electrode, without limitation, as long as it is used in an all-solid-state battery, and can include, for example, a positive electrode active material, a solid electrolyte, a conductive material, and a binder. Any positive electrode active material that can be used as a positive electrode active material in an all-solid-state battery can be used without limitation. The positive electrode active material may be a lithium transition metal oxide comprising one or more transition metals. For example, the positive electrode active material may be selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂, LiNi_{1-y}Mn_{y}O₂ (wherein 0<y<1), Li(NiₐCo_{b}Mn_{c})O₄ (0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), and combinations thereof.

In addition, the binder is mixed with the positive electrode active material and the conductive material, which are powdered particulates, to bind the components together and aid in the growth of the particles. For example, sulfide-based solid electrolytes have moisture-sensitive properties, such as the generation of H2S gas upon contact with water, so it is desirable to exclude as much moisture as possible from the granule formation process. The binder may be an organic binder, wherein the organic binder refers to a binder that is soluble or dispersible in an organic solvent, in particular N-methylpyrrolidone (NMP), as distinguished from an aqueous binder, wherein water is used as a solvent or a dispersing medium. For example, the binder may be selected from the group consisting of, but not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene-butylene rubber, and fluororubber.

An electrode laminate according to one embodiment of the present disclosure may include an electrolyte film (3). The electrolyte film may comprise a solid electrolyte, wherein the solid electrolyte may comprise at least one selected from a sulfide-based solid electrolyte, a polymer-based solid electrolyte, and an oxide-based solid electrolyte, and may preferably comprise only a sulfide-based solid electrolyte. The sulfide-based solid electrolyte may comprise a lithium salt, wherein the lithium salt is an ionizable lithium salt, expressed as Li⁺X⁻. These lithium salts are not specifically limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻_{,} CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ as anions.

Furthermore, the sulfide-based solid electrolyte may comprise a Li-P-S-based glass or a Li-P-S-based glass-ceramic, which contains sulfur (S) and has an ionic conductivity of a metal belonging to Group 1 or 2 of the periodic table. Non-limiting examples of these sulfide-based solid electrolytes include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and the sulfide-based solid electrolyte may comprise one or more thereof.

These solid electrolytes can act as a separator in a typical lithium secondary battery (i.e., electrically insulate the negative electrode and positive electrode while allowing lithium ions to pass through). On the other hand, the all-solid-state battery can be utilized as a semi-solid-state battery by including a liquid electrolyte as needed, in which case a separate polymer separator may be required.

An electrode laminate according to one embodiment of the present disclosure may include a negative electrode (4). The negative electrode may include any negative electrode active material available in conventional all-solid-state batteries. For example, the negative electrode active material may include at least one selected from the group consisting of carbon, such as anthracite carbon, graphitized carbon, and the like; metal complex oxide, such as LiₓFe₂O₃ (wherein 0≤x≤1), LiₓWO₂ (wherein 0≤x≤1), SnₓMe₁₋ₓMe'_{y}O_{z} (wherein Me is Mn, Fe, Pb, or Ge; Me' is Al, B, P, or Si; elements of Group 1, 2 or 3 of the periodic table; halogen; 0<x≤1; 1≤y≤3; and 1≤z≤8) and other metal complex oxides; lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; conductive polymers such as polyacetylene; Li-Co-Ni based materials; titanium oxides; and lithium titanium oxides.

An electrode laminate according to one embodiment of the present disclosure may be in a form of an anodeless battery (negative electrode-less battery).

In a case where an electrode laminate is an anodeless battery, lithium metal is either absent or present in only a small amount on the negative electrode current collector during initial battery manufacturing. However, during charging, metallic lithium precipitates between the negative electrode active material layer and the current collector to form a lithium metal layer. During discharge, the battery is driven by the mechanism that the metallic lithium ionizes and moves toward a positive electrode,.

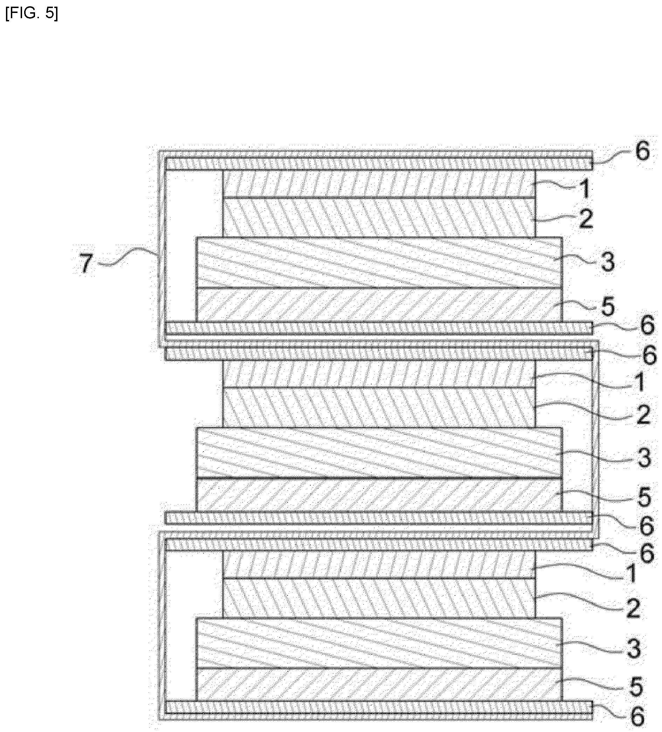

The anodeless battery may lack a negative electrode active material layer during initial manufacturing. Referring to the electrode laminate in FIG. 1, no negative electrode active material is present on the negative electrode current collector initially as illustrated in FIG. 5. Instead, a lithium metal layer formed via charging acts as the negative electrode.

The anodeless battery's negative electrode may include a structure comprising a negative electrode active material layer with metals alloying with lithium and carbon materials.

A thickness of the negative electrode active material layer is typically 1 µm to 100 µm, preferably 10 µm to 60 µm, and specifically 10 µm, 20 µm, 30 µm, 40 µm, or 50 µm, though not limited thereto.

The all-solid-state battery according to one embodiment of the present disclosure includes a composite separator (6, 7).

The composite separator (6, 7) includes a separator layer (7) and a buffer layer (6) disposed on at least one surface of the separator layer. Preferably, the buffer layer (6) is formed on both sides of the separator layer (7).

In the all-solid-state battery according to one embodiment of the present disclosure, the composite separator (6, 7) may secure the electrode laminate.

The separator layer may include any material commonly used in secondary batteries, preferably include a separator using one or more materials selected from the group consisting of polyethylene (PE), polypropylene (PP), and resins made of a blend of PE and PP.

In the all-solid-state battery according to one embodiment of the present disclosure, a positive electrode current collector (1) may be positioned on the positive electrode of the electrode laminate and the composite separator (6, 7), while a negative electrode current collector (5) may be positioned on the negative electrode of the electrode assembly and the composite separator (6, 7).

In the all-solid-state battery according to one embodiment of the present disclosure, the buffer layer (6) may include at least one material selected from a group consisting of silicone, PTFE, polyurethane resin (PUR), polyolefin (PO), and polyamide (PA).

In the all-solid-state battery according to one embodiment of the present disclosure, the separator layer may have a thickness of 4 µm to 10 µm, preferably 5 µm or more, 6 µm or more, or 7 µm or more, and 9 µm or less, 8 µm or less, or 7 µm or less.

In the all-solid-state battery according to one embodiment of the present disclosure, the buffer layer (6) may have a thickness of 10 µm to 50 µm, preferably 15 µm or more, 20 µm or more, 25 µm or more, or 30 µm or more, and 45 µm or less, 40 µm or less, 35 µm or less, or 30 µm or less.

In the all-solid-state battery according to one embodiment of the present disclosure, the buffer layer (6) may be in contact with an electrode laminate, thereby securing the electrode assembly.

In the all-solid-state battery according to one embodiment of the present disclosure, the electrode laminate comprising a positive electrode (2), an electrolyte film (3), and a negative electrode (4) may have various structures.

Specifically, the electrode laminate may be a monocell or bi-cell.

In an all-solid-state battery according to one embodiment of the present disclosure, the electrode laminate may have the structure of a single-sided electrode as illustrated in FIG. 1. In an all-solid-state battery according to one embodiment of the present disclosure, a single-sided electrode may mean an electrode in which the electrode layer is formed on only one side of the current collector (foil).

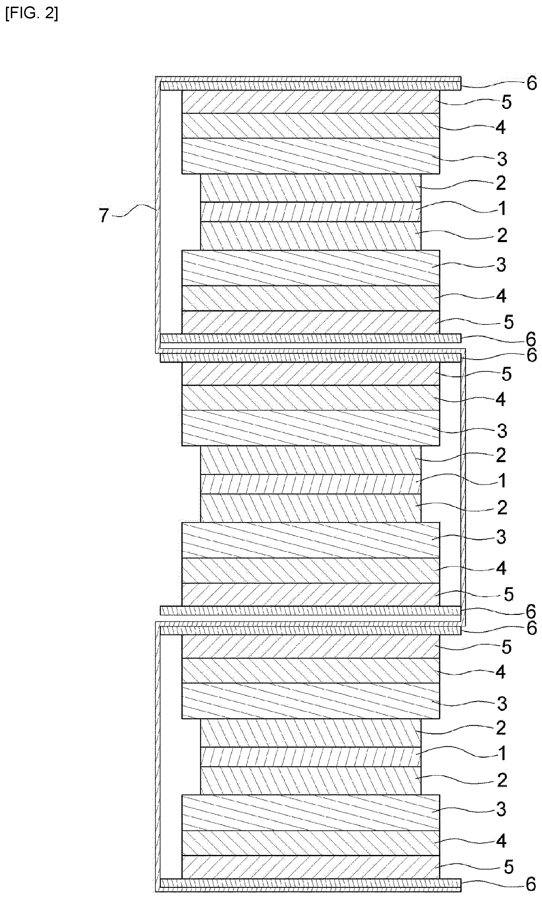

In an all-solid-state battery according to one embodiment of the present disclosure, the electrode laminate may have a C-type structure as illustrated in FIG. 2. In an all-solid-state battery according to one embodiment of the present disclosure, a C-type structure may mean a structure in which an electrode having a positive electrode layer formed on both sides of a current collector (foil) is positioned in the center, and on both sides of the electrode, electrolyte layers and electrodes having a negative electrode layer on one side of the current collector (foil) are positioned.

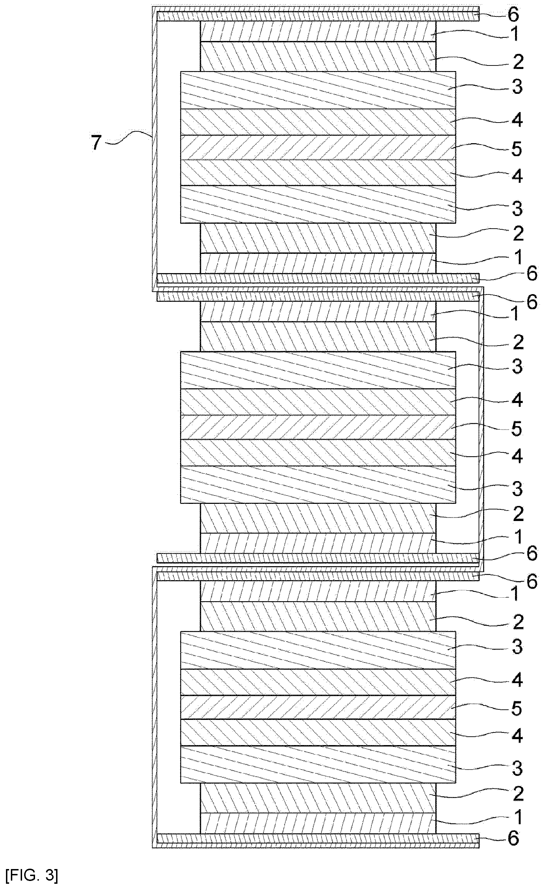

In an all-solid-state battery according to one embodiment of the present disclosure, the electrode laminate may have an A-type structure as shown in FIG. 3. In an all-solid-state battery according to one embodiment of the present disclosure, an A-type structure may mean a structure in which an electrode having a negative electrode layer formed on both sides of a current collector (foil) is positioned in the center, and on both sides of the electrode, electrolyte layers and electrodes having a positive electrode layer on one side of the current collector (foil) are positioned.

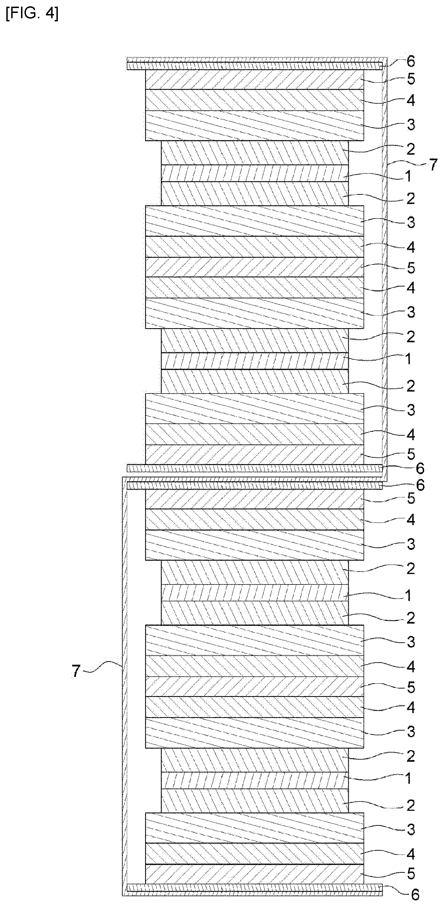

In an all-solid-state battery according to one embodiment of the present disclosure, the electrode laminate may have a multi-unit cell as shown in FIG. 4. In an all-solid-state battery according to one embodiment of the present disclosure, a multi-unit cell is one that utilizes more double-sided electrodes than a typical unit cell to improve energy density. For example, as shown in FIG. 4, it may mean a structure in which an electrode having a negative electrode layer formed on both sides of a current collector (foil) is positioned in the center, and on both sides of the electrode, electrolyte layers and electrodes having positive electrode layers on both sides of the current collector (foil) are located, and then, at the outermost edge, an electrode having a negative electrode layer formed on one side of the current collector (foil) is located.

The present disclosure also provides a battery module comprising the all-solid-state battery as a unit cell, a battery pack comprising the battery module, and a device comprising the battery pack as a power source. Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

Although the present invention has been described above by way of limited examples and drawings, the invention is not limited thereby, and various modifications and variations may be made by those having ordinary skill in the art, within the technical idea of the invention and the equivalent scope of the patent claims set forth below.

### [Reference Numerals]

1: Positive electrode current collector
2: Positive electrode
3: Electrolyte film
4: Negative electrode
5: Negative electrode current collector
6: Buffer layer
7: Separator layer

## Claims

1. An all-solid-state battery comprising:
an electrode laminate including a positive electrode, an electrolyte film, and a negative electrode; and
a composite separator that wraps the electrode laminate in a zigzag pattern, positioning the electrode laminate at folded sections,
wherein the composite separator includes a separator layer and a buffer layer disposed on at least one surface of the separator layer.

2. The all-solid-state battery according to claim 1,
wherein the separator layer comprises any one material selected from a group consisting of polyethylene (PE), polypropylene (PP), and resins made of a blend of PE and PP.

3. The all-solid-state battery according to claim 1,
wherein the buffer layer comprises any one material selected from a group consisting of silicone, PTFE, polyurethane resin (PUR), polyolefin (PO), and polyamide (PA).

4. The all-solid-state battery according to claim 1,
wherein the separator layer has a thickness of 4 to 10 µm.

5. The all-solid-state battery according to claim 1,
wherein the buffer layer has a thickness of 10 to 50 µm.

6. The all-solid-state battery according to claim 1,
wherein the buffer layer is in contact with the electrode laminate, thereby securing the electrode assembly.

7. The all-solid-state battery according to claim 1,
wherein the electrode laminate is a monocell or bi-cell.

8. The all-solid-state battery according to claim 1,
wherein the electrode laminate is in a form of an anodeless.
